# FASCICULE DE BREVET EUROPEEN

(11) **EP 1 564 045 B1**
(45) Date de publication et mention de la délivrance du brevet: **08.04.2009**
(21) Numéro de dépôt: 05000459.7
(22) Date de dépôt: 12.01.2005
(51) Int. Cl.: B60H 1/00

(54) **Unité de distribution d'air pour une installation de chauffage, ventilation et/ou climatisation d'un véhicule**
Luftverteilungseinheit für eine Heizungs-, Lüftungs- und/oder Klimaanlage von Fahrzeuge
Air distribution unit for a heating, ventilation and/or air conditioning system of a vehicle

(30) Priorité: 17.02.2004 FR 0401557
(43) Date de publication de la demande: 17.08.2005
(73) Titulaire: Valeo Systèmes Thermiques, 78321 Le Mesnil St Denis Cedex (FR)
(72) Inventeur: Decoux, Ludovic, 78990 Elancourt (FR)

(56) Documents cités:
- EP-A- 0 709 241
- EP-A- 1 247 667
- EP-A- 1 319 540
- DE-A- 3 805 168
- FR-A- 2 771 966
- US-A- 4 267 880

## Description

### Arrière-plan de l'invention

La présente invention concerne une unité de distribution d'air pour une installation de chauffage, ventilation et/ou climatisation d'un véhicule. L'unité de distribution d'air peut comprendre plusieurs volets pour contrôler le passage d'air à travers des bouches d'alimentation correspondant à des sorties s'ouvrant dans l'habitacle du véhicule.

Le document EP-A 0 709 241 montre une unité de distribution d'air selon le préambule de la revendication.

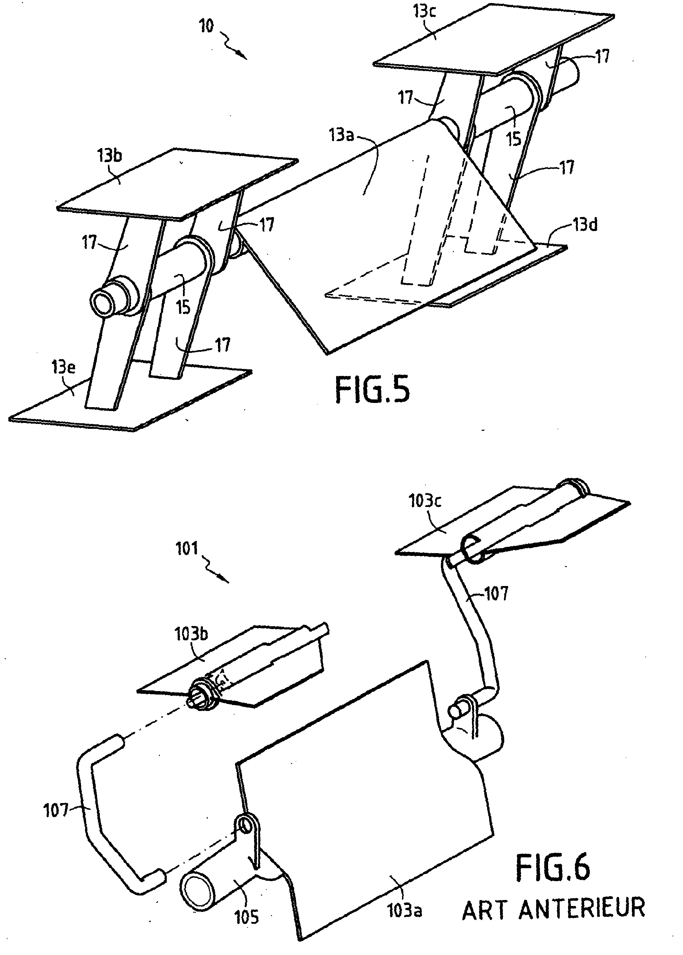

La figure 6 montre, de façon traditionnelle, une unité de distribution d'air 101 comportant un volet 103a en forme de papillon, sur un axe central 105 ainsi que deux autres volets 103b et 103c reliés sur l'axe central 105 par l'intermédiaire de deux bielles 107. Les volets 103b et 103c sont décalés par rapport à l'axe central 105 et tournent autour des axes séparés de cet axe central 105.

La commande de l'unité de distribution d'air 101 est assurée par un moteur pas à pas (non représenté) qui agit sur un seul volet, en l'occurrence le volet 103 disposé sur l'axe central 105. Ceci peut engendrer un problème de fermeture au niveau des volets 103b et 103c qui ne sont pas directement commandés par le moteur provoquant des fuites d'air. Il en résulte aussi un problème d'effort de commande.

Un autre problème concerne la tenue des bielles 107 sur les volets 103b et 103c durant la vie du véhicule. En effet, il peut y avoir un problème de rupture de liaison par un désengagement d'au moins une bielle de sa position de montage.

De plus, ces bielles 107 sont en métal, d'où un risque de corrosion.

### Objet et résumé de l'invention

La présente invention a pour but de remédier à ces inconvénients et propose à cet effet une unité de distribution d'air plus simple et plus performante.

Ainsi, l'invention concerne une unité de distribution d'air, notamment pour une installation de chauffage, ventilation et/ou climatisation d'un véhicule, comprenant une pluralité de volets pour contrôler le passage d'air à travers une pluralité de bouches d'alimentation de conduits de distribution d'air, lesdites bouches d'alimentation étant disposées selon une pluralité de plans distincts, caractérisé en ce que ladite pluralité de volets contrôle le passage d'air à travers ladite pluralité de bouches d'alimentation par rotation autour d'un axe unique.

Le fait que la pluralité de volets tourne autour d'un axe unique permet de supprimer les bielles, de simplifier le montage et de réduire les coûts.

En outre, la suppression des bielles enlève le risque de la tenue de celles-ci sur les volets.

De plus, il n'y a plus de problèmes d'étanchéités dûs aux dispersions entre des pièces différentes.

Un autre avantage est le fait que les différents volets, en tournant autour d'un axe unique, sont commandés en direct, sans aucun intermédiaire qui peut présenter des jeux de mouvements, d'où une amélioration des efforts de commande.

Avantageusement, l'axe unique porte ladite pluralité de volets.

L'unité de distribution d'air peut comporter trois ou quatre volets.

Selon une particularité de l'invention, l'unité de distribution d'air forme une pièce unique et mono-corps.

Selon une autre particularité de l'invention, la pluralité de bouches d'alimentation correspond à des sorties pieds haute et basse.

Avantageusement, l'unité de distribution d'air est une pièce moulée.

L'unité de distribution d'air peut être constituée en matériau plastique.

L'invention vise aussi une installation de chauffage, ventilation et/ou climatisation d'un véhicule comportant au moins une unité de distribution d'air comme ci-dessus.

### Brève description des dessins

D'autres particularités et avantages du dispositif selon l'invention ressortiront mieux à la lecture de la description faite ci-après, à titre indicatif mais non limitatif, en référence aux dessins annexés sur lesquels :
- la figure 1 illustre une installation de chauffage, ventilation et/ou climatisation pour un véhicule automobile comportant des unités de distribution d'air ;
- la figure 2 illustre de façon schématique une unité de distribution d'air présentant un axe unique selon l'invention, montée dans l'installation de chauffage, ventilation et/ou climatisation de la figure 1 ;
- la figure 3 illustre de façon schématique l'unité de distribution d'air de la figure 2;
- les figures 4 et 5 sont des variantes de la figure 3 ; et
- la figure 6 illustre une unité de distribution d'air selon l'art antérieur.

### Description détaillée de modes préférentiels de réalisation

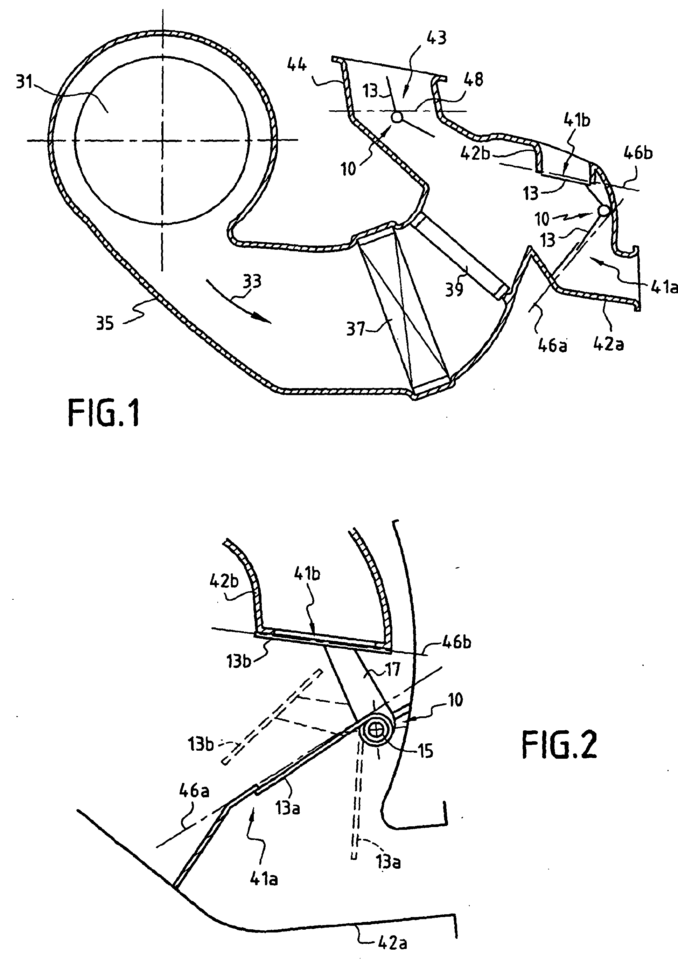

La figure 1 montre une installation de chauffage, ventilation et/ou climatisation de l'habitacle d'un véhicule, comportant, de façon bien connue, un groupe moto-ventilateur ou pulseur 31, délivrant un flux d'air 33 dans un conduit d'air 35. Dans ce dernier, sont disposés un évaporateur 37, et un radiateur de chauffage 39.

En aval de l'évaporateur 37, par rapport au sens du flux d'air 33, le conduit d'air 35 comporte des unités de distribution d'air 10 dont chacune peut comporter une pluralité de volets 13 pour contrôler le passage d'air à travers une pluralité de bouches d'alimentation 41a, 41b et 43, de conduits de distribution d'air 42a, 42b, 44 s'ouvrant dans l'habitacle du véhicule. Les bouches d'alimentation 41a, 41b et 43 sont disposées selon des plans distincts 46a, 46b, et 48 respectivement.

A titre d'exemple, les bouches d'alimentation 41a et 41b correspondent respectivement à des sorties pieds haute et basse et la bouche d'alimentation 43 correspond à une sortie aération.

En outre, chaque unité de distribution d'air 10 est commandée par un moteur pas à pas (non représenté), afin de contrôler la fermeture ou le niveau d'ouverture des bouches d'alimentation 41a, 41b et 43.

La figure 2 illustre une unité de distribution d'air 10 montée dans l'installation de chauffage, ventilation et/ou climatisation, au niveau selon cet exemple, des bouches d'alimentation 41b et 41a correspondant respectivement aux sorties pieds haute et basse.

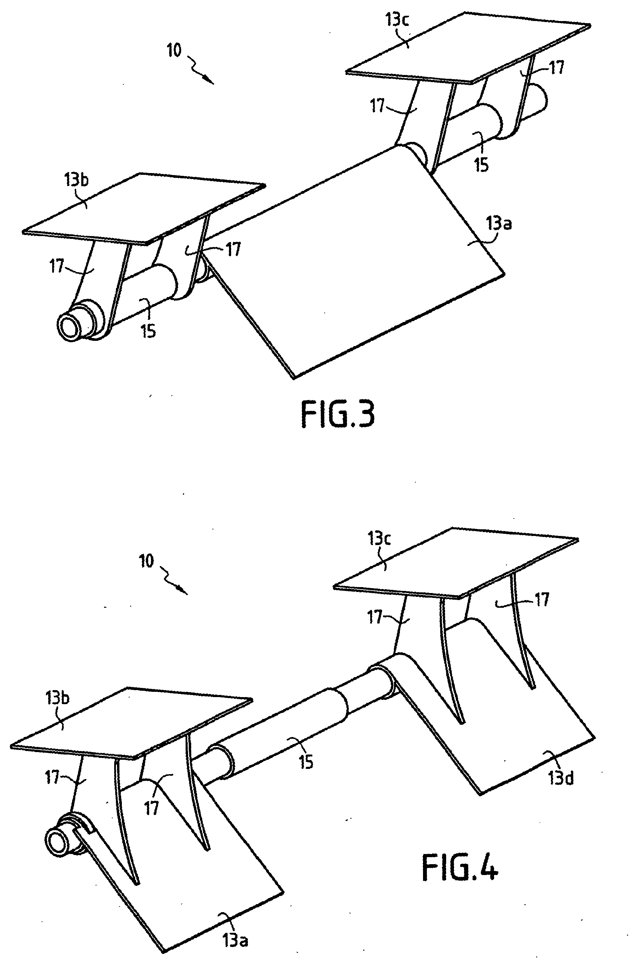

Cette unité de distribution d'air comprend une pluralité de volets (deux volets 13a et 13b sont illustrés sur la figure 3) pour contrôler le passage d'air à travers les bouches d'alimentation 41a, 41b de conduits de distribution d'air 42a, 42b. Ces bouches d'alimentation 41a et 41b sont disposées respectivement selon les plans distincts 46a et 46b.

Conformément à l'invention, la pluralité de volets 13a, 13b contrôle le passage d'air à travers les bouches d'alimentation 41a, 41b par rotation autour d'un axe unique 15.

Cette figure montre en traits continus la position de fermeture des bouches d'alimentation correspondant aux sorties pieds par l'unité de distribution d'air 10. En particulier, le volet 13a ferme la bouche d'alimentation 41a correspondant à la sortie basse et le volet 13b ferme la bouche d'alimentation 41b correspondant à la sortie haute.

Il est aussi montré, en traits interrompus, une position d'ouverture des bouches de distribution d'air de sorties pieds par l'unité de distribution d'air 10.

La figure 3 illustre de façon schématique l'unité de distribution d'air 10 comprenant l'axe unique 15 qui porte un premier volet 13a, un deuxième volet 13b, et un troisième volet 13c.

Ainsi, les volets 13a, 13b, 13c et l'axe unique 15 forment une seule et même pièce. Autrement dit, l'unité de distribution d'air forme une pièce unique et monocorps. Par conséquent, l'effort de commande d'un moteur, agissant sur l'unité de distribution d'air 10, est optimal car aucun jeu de mouvement ne vient perturber la transmission d'effort de commande.

Avantageusement, l'unité de distribution d'air 10 est une pièce moulée. Cette unité de distribution d'air 10 peut être constituée en matériau plastique.

Selon cet exemple, les volets 13a, 13b, et 13c sont sensiblement plans et sensiblement rectangulaires.

Il est aussi envisageable que chacun des volets ait une forme de papillon, une forme cylindrique de type tambour, ou une forme de drapeau. En outre, les volets d'une unité de distribution d'air peuvent avoir des formes différentes comportant une combinaison de tous ces types de volets.

Selon cet exemple, le premier volet 13a prend naissance, sur un de ces côtés, à partir d'une partie centrale de l'axe unique 15.

Les deuxième et troisième volets 13b et 13c sont décalés par rapport à l'axe unique 15 grâce à des bras de liaisons 17 reliant solidairement les volets 13b et 13c à l'axe unique 15. Plus particulièrement, les deuxième et troisième volets 13b et 13c sont disposés en regard des extrémités de l'axe unique 15 et chacun des volets 13b, 13c est solidaire de l'axe 15 par l'intermédiaire de deux bras de liaisons 17. Ainsi, les volets 13a, 13b, 13c, tout en tournant autour de l'axe unique 15, peuvent contrôler le passage d'air à travers des bouches d'alimentation disposées selon des plans distincts.

La figure 4 est une variante de la figure 2 ne faisant pas partie de la présente invention et donnée à titre d'exemple illustrant une unité de distribution d'air 10 formant une pièce unique et comprenant un premier volet 13a, un deuxième volet 13b, un troisième volet 13c, et un quatrième volet 13d.

La structure monocorps de l'unité de distribution d'air 10 comporte toujours un axe unique 15 portant les quatre volets 13a, 13b, 13c, et 13d.

Selon cet exemple, les premier et deuxième volets 13a, 13b sont disposés au niveau d'une extrémité de l'axe unique 15, tandis que les troisième et quatrième volets 13c, 13d sont disposés au niveau de l'autre extrémité de l'axe unique 15.

En particulier, les premier et quatrième volets 13a, 13d prennent naissance à partir des parties extrêmes de l'axe unique 15.

En revanche, les deuxième et troisième volets 13b, 13c sont décalés par rapport à l'axe unique 15 grâce aux bras de liaisons 17.

La figure 5 est encore une variante de la figure 3 illustrant une unité de distribution d'air 10 formant une pièce unique et comprenant un premier volet 13a, un deuxième volet 13b, un troisième volet 13c, un quatrième volet 13d, et un cinquième volet 13e.

La structure monocorps de l'unité de distribution d'air 10 comporte toujours un axe unique 15 portant les cinq volets 13a, 13b, 13c, 13d, et 13e.

Selon cet exemple, le premier volet 13a prend naissance, sur un de ces côtés, à partir d'une partie centrale de l'axe unique 15.

Les deuxième et cinquième volets 13b, 13e sont disposés au niveau d'une extrémité de l'axe unique 15, tandis que les troisième et quatrième volets 13c, 13d sont disposés au niveau de l'autre extrémité de l'axe unique 15.

En particulier, les volets 13b, 13c, 13d, et 13e sont décalés par rapport à l'axe unique 15 grâce aux bras de liaisons 17 et peuvent tous être disposés selon des plans distincts.

Bien entendu, la forme, la disposition, ou le nombre de volets peut être quelconque dépendant du nombre, de la forme ou de la disposition relative des bouches d'alimentation de l'installation de chauffage, ventilation et/ou climatisation.

## Revendications

1. Unité de distribution d'air (10), notamment pour une installation de chauffage, ventilation et/ou climatisation d'un véhicule, comprenant au moins trois volets (13a, 13b, 13c, 13d, 13e) pour contrôler le passage d'air à travers une pluralité de bouches d'alimentation (41a, 41b) de conduits de distribution d'air (42a, 42b) par rotation autour d'un axe unique (15), lesdites bouches d'alimentation étant disposées selon une pluralité de plans distincts (46a, 46b), et un premier volet (13a) prenant naissance au niveau d'une partie centrale de l'axe unique (15)
**caractérisée en ce qu'**au moins un deuxième volet (13b) et un troisième volet (13c) sont disposés en regard des extrémités de l'axe unique (15) et sont décalés par rapport à l'axe unique (15) grâce à des bras de liaison (17) les reliant solidairement à l'axe unique (15).

2. Unité selon la revendication 1, **caractérisée en ce que** le premier volet (13a) est disposé en partie centrale de l'axe unique (15).

3. Unité selon l'une des revendications précédentes, **caractérisée en ce qu'**un quatrième volet (13d) est solidaire de l'axe unique (15) par l'intermédiaire de bras de liaison (17).

4. Unité selon la revendication 3, **caractérisée en ce qu'**un cinquième (13e) est solidaire de l'axe unique (15) par l'intermédiaire de bras de liaison (17).

5. Unité selon l'une quelconque des revendications 1 à 4, **caractérisée en ce que** ladite unité de distribution d'air (10) forme une pièce unique et mono-corps.

6. Unité selon la revendication 1, **caractérisée en ce que** la pluralité de bouches d'alimentation (41a, 41b) correspond à des sorties pieds haute et basse.

7. Unité selon l'une quelconque des revendications 1 à 6, **caractérisée en ce que** ladite unité de distribution d'air (10) est une pièce moulée.

8. Unité selon l'une quelconque des revendications 1 à 7, **caractérisée en ce que** ladite unité de distribution d'air (10) est constituée en matériau plastique.

9. Installation de chauffage, ventilation et/ou climatisation d'un véhicule comportant au moins une unité de distribution d'air (10) selon l'une quelconque des revendications 1 à 8.

## Claims

1. Air distribution unit (10), notably for a heating, ventilation and/or air conditioning installation of a vehicle, comprising at least three flaps (13a, 13b, 13c, 13d, 13e) for controlling the passage of air through a plurality of supply outlets (41a, 41b) of air distribution ducts (42a, 42b) by rotation about a single shaft (15), the said supply outlets being placed on a plurality of distinct planes (46a, 46b), and a first flap (13a) originating at a central portion of the single shaft (15), **characterized in that** at least a second flap (13b) and a third flap (13c) are placed facing the ends of the single shaft (15) and are offset relative to the single shaft (15) thanks to connecting arms (17) linking them firmly to the single shaft (15).

2. Unit according to Claim 1, **characterized in that** the first flap (13a) is placed in the central portion of the single shaft (15).

3. Unit according to one of the preceding claims, **characterized in that** a fourth flap (13d) is secured to the single shaft (15) by means of connecting arms (17).

4. Unit according to Claim 3, **characterized in that** a fifth flap (13e) is secured to the single shaft (15) by means of connecting arms (17).

5. Unit according to any one of Claims 1 to 4, **characterized in that** the said air distribution unit (10) forms a single and mono-bodied part.

6. Unit according to Claim 1, **characterized in that** the plurality of supply outlets (41a, 41b) corresponds to high and low feet outlets.

7. Unit according to anyone of Claims 1 to 6, **characterized in that** the said air distribution unit (10) is a moulded part.

8. Unit according to any one of Claims 1 to 7, **characterized in that** the said air distribution unit (10) is made of plastic material.

9. Heating, ventilation and/or air conditioning installation of a vehicle comprising at least one air distribution unit (10) according to any one of Claims 1 to 8.

## Patentansprüche

1. Luftverteilungseinheit (10), insbesondere für eine Heiz-, Belüftungs- und/oder Klimatisierungsanlage eines Fahrzeugs, die mindestens drei Klappen (13a, 13b, 13c, 13d, 13e) zum Steuern des Luftdurchgangs durch eine Mehrzahl von Zufuhröffnungen (41a, 41b) von Luftverteilungsleitungen (42a, 42b) durch Drehen um eine einzige Achse (15) aufweist, wobei die Zufuhröffnungen gemäß einer Mehrzahl von getrennten Ebenen (46a, 46b) angeordnet sind, und wobei eine erste Klappe (13a) von dem Niveau eines zentralen Teils der einzigen Achse (15) ausgeht, **dadurch gekennzeichnet, dass** mindestens eine zweite Klappe (13b) und eine dritte Klappe (13c) in Gegenüberlage zu den Enden der einzigen Achse (15) angeordnet und in Bezug zu der einzigen Achse (15) dank Verbindungsarmen (17), welche sie fest mit der einzigen Achse (15) verbinden, versetzt sind.

2. Einheit nach Anspruch 1, **dadurch gekennzeichnet, dass** die erste Klappe (13a) im zentralen Teil der einzigen Achse (15) angeordnet ist.

3. Einheit nach einem der vorhergehenden Ansprüche, **dadurch gekennzeichnet, dass** eine vierte Klappe (13d) fest mit der einzigen Achse (15) über Verbindungsarme (17) verbunden ist.

4. Einheit nach Anspruch 3, **dadurch gekennzeichnet, dass** eine fünfte Klappe (13e) fest mit der einzigen Achse (15) über Verbindungsarme (17) verbunden ist.

5. Einheit nach einem der Ansprüche 1 bis 4, **dadurch gekennzeichnet, dass** die Luftverteilungseinheit (10) einen einzigen und einstückigen Teil bildet.

6. Einheit nach Anspruch 1, **dadurch gekennzeichnet, dass** die Mehrzahl von Zufuhröffnungen (41a, 41b) oberen und unteren Fußausgängen entspricht.

7. Einheit nach einem der Ansprüche 1 bis 6, **dadurch gekennzeichnet, dass** die Luftverteilungseinheit (10) ein Formteil ist.

8. Einheit nach einem der Ansprüche 1 bis 7, **dadurch gekennzeichnet, dass** die Luftverteilungseinheit (10) aus einem Kunststoff besteht.

9. Heiz-, Belüftungs- und/oder Klimatisierungsanlage für ein Fahrzeug, die mindestens eine Luftverteilungseinheit (10) nach einem der Ansprüche 1 bis 8 aufweist.
